# EUROPEAN PATENT SPECIFICATION

(11) **EP 0 384 721 B1**
(45) Date of publication and mention of the grant of the patent: **04.05.1994**
(21) Application number: 90301835.6
(22) Date of filing: 21.02.1990
(51) Int. Cl.: B21C 37/08, B23D 21/04

(54) **Pipe cutting device**
Rohrschneidevorrichtung
Dispositif pour couper les tubes

(30) Priority: 23.02.1989 JP 43612/89
(43) Date of publication of application: 29.08.1990
(73) Proprietor: NISSHIN STEEL CO., LTD., Chiyoda-ku Tokyo 100 (JP)
(72) Inventor: Kitaoka, Takeo, c/o Nisshin Steel Co., Ltd., Amagasaki, Hyogo (JP); Nagahiro, Akiyoshi, c/o Nisshin Steel Co., Ltd., Amagasaki, Hyogo (JP)
(74) Representative: Bond, Bentley George

(56) References cited:
- DD-A- 118 544
- DE-A- 3 718 886
- DE-C- 929 701
- US-A- 1 930 295
- US-A- 2 112 396
- US-A- 4 111 346

## Description

The present invention relates to a device for cutting a moving circular pipe.

As is known, when forming a circular pipe, a strip-like plate is first uncoiled from a thick strip coil and then gradually formed into a circular shape along a longitudinal axis. The opposite edges of the strip are then welded to form a circular pipe.

A known device for cutting the pipe thus formed into a certain length in a pipe-forming line has a carriage located underneath the pipe that is fed into the device. A carriage is located parallel to the axial direction of the pipe, and a cutting means is mounted on the carriage. The carriage reciprocates at the same speed as the circular pipe so that a circular cutter (such as an abrasive wheel, metal saw, etc.) cuts the pipe at right angles relative to the axis of the pipe. Such a device is known, for example, from document US-A- 1 930 295 on which the preamble of claim 1 is based.

However, if the pipe is made of a thin plate material, it is likely that dents will form on the pipe when the edges of the cutter contact the pipe. Also, many burrs may form at the cut edges of the pipe. Since pipes with dents and burrs are not usable, they must be further cut in an additional step, resulting in the waste of material and in the necessity of another device for the additional cutting.

Accordingly, it is an object of the present invention to overcome the problems found in the prior art pipe cutting system and provided a device which can cut a circular pipe in a pipe-forming line in a factory.

According to the present invention, there is provided a device for cutting a circular pipe whilst the pipe is moving along its axis, the device comprising:
(a) a first carriage mounted on a base so that it can reciprocate beneath the pipe in a direction parallel to the axis of the pipe;
(b) an outer cutting assembly mounted on the first carriage, the outer cutting assembly having a hollow tube through which the pipe passes, and an outer circular cutter mounted at the outlet of the hollow tube so as to be rotatable about the axis of the pipe;
   characterised in that the device further comprises:
(c) a second carriage mounted on the first carriage so that it can reciprocate in a direction parallel to the axis of the pipe;
(d) a plurality of guide rods extending in a direction opposite to the direction in which the pipe moves and parallel to the axis of the pipe, each of the guide rods being such that the pipe can fit onto the guide rod;
(e) supporting means that supports the extending guide rods on the second carriage such that each extending guide rod can be brought to a position at which it can receive the pipe as the pipe leaves the outlet of the hollow tube, the supporting means comprising a supporting arm detachably mounting, at its ends, the proximal ends of the guide rods, a supporting shaft secured to the centre of the supporting arm such that the supporting shaft is positioned at the centre of a circle along which the guide rods are arranged, and a rotation assembly for said supporting shaft mounted on said second carriage so that the supporting shaft can be rotated intermittently and stopped when each guide rod coincides with the centre of the hollow tube; and
(f) an inner circular cutter at the distal end of each guide rod.

Reference will now be made, by way of example, to the drawings in which:
Fig. 1 is a schematic side view of a pipe cutting device according to the present invention;
Fig. 2 is a top plan view of the device of Fig. 1;

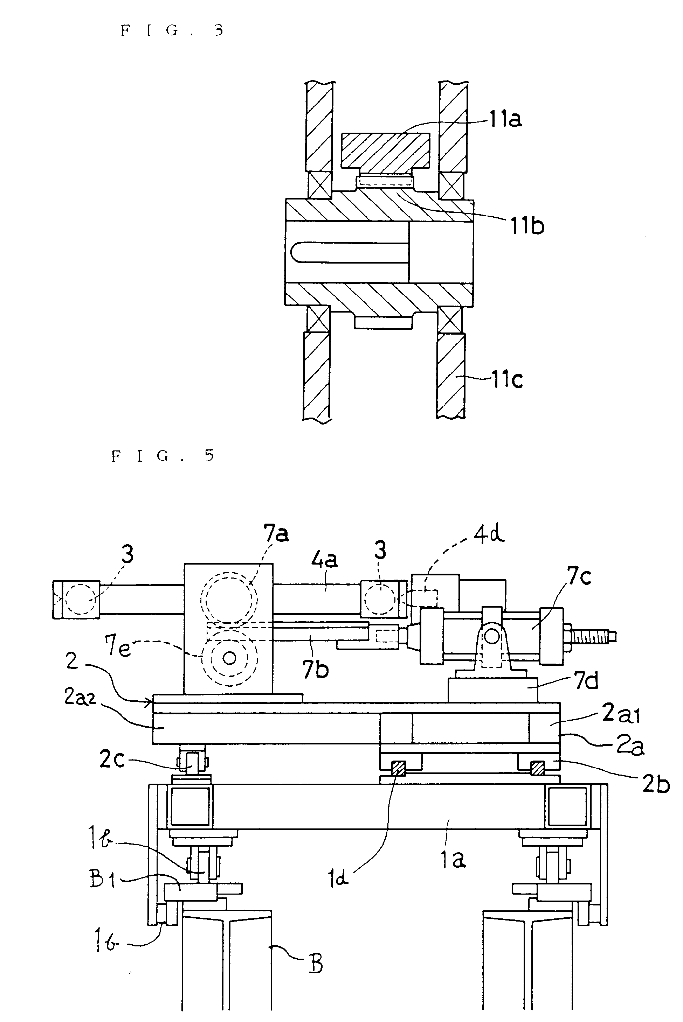

Fig. 3 is a cross sectional view taken along the line III-III of Fig. 1;
Fig. 4 is a view, from the other side, of part of the device of Fig. 1;
Fig. 5 is a view of Fig. 4; and
Fig. 6 is an enlarged vertical sectional view of the outer cutting assembly.

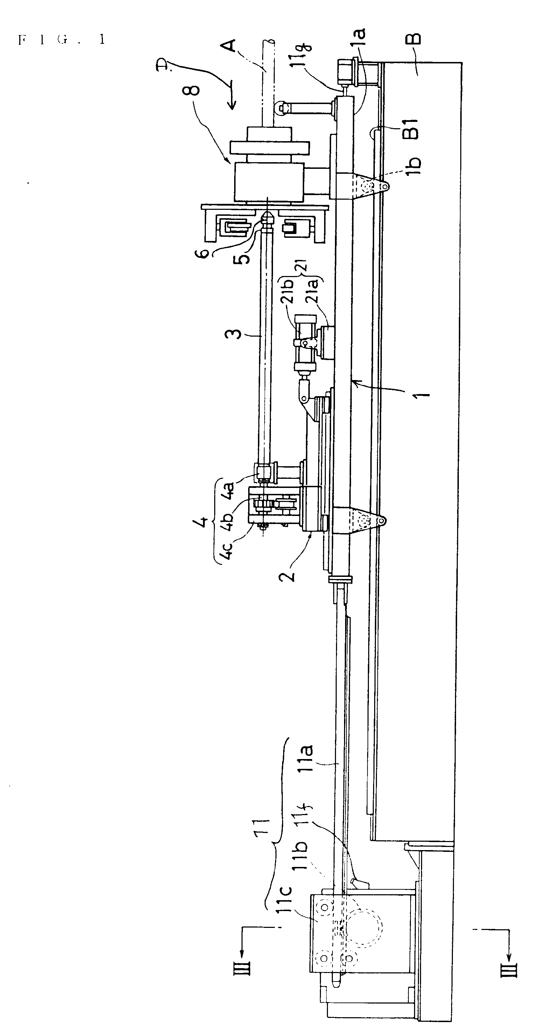

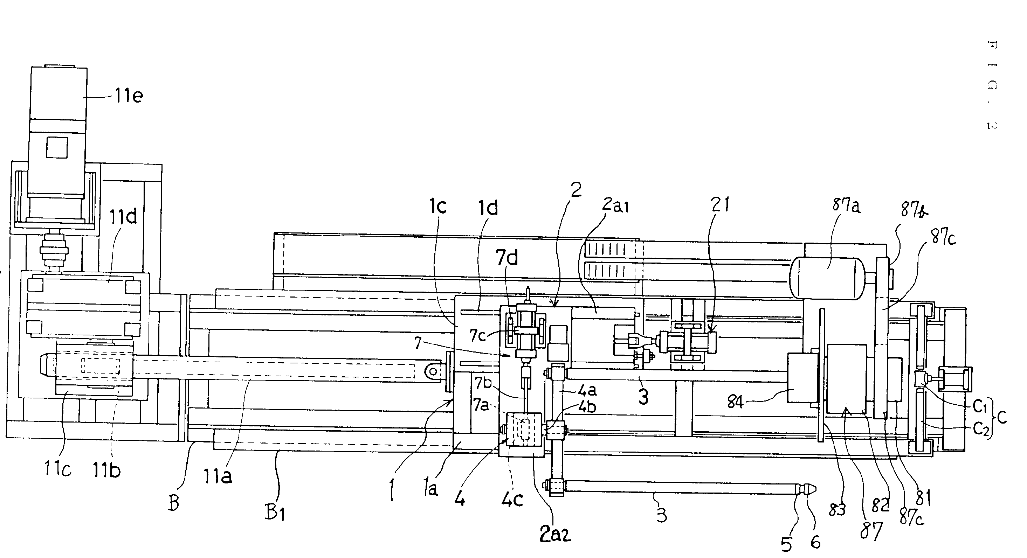

As shown in Figs. 1 and 2, in the device of the present invention, a circular pipe A is kept substantially horizontal, and runs (i.e. is fed) along its axis as shown by the arrow D.

The direction of movement of the pipe A is defined herein as follows: The direction of the circular pipe moving (or fed) forward (i.e. in the direction of the arrow D) is movement in the "running direction" (to the left in Fig. 1); the opposite direction (i.e. the direction opposite the arrow D) is the" anti-running direction" (to the right in Fig. 1); and horizontal radial movement of the pipe is movement in the "transverse direction" (perpendicular to the drawing sheet).

Underneath the circular pipe A, a first carriage 1 is movably mounted on a pair of rails B1 which in turn is mounted on a base B so that the first carriage 1 can reciprocate in a direction parallel to the axis of the circular pipe A.

On the first carriage 1, an outer cutting assembly 8 is mounted. The circular pipe A is cut by this outer cutting assembly 8 (as described below) while the first carriage 1 is moving at the same speed as the speed of movement of the circular pipe A.

The first carriage 1 has a carriage body 1a, which is rectangular in shape (when viewed from the top) and is provided with pairs of wheels 1b that rest on the rails B1. Preferably, two or four pairs of wheels 1b are provided on the carriage body 1a.

The outer cutting assembly 8 is similar to that of the prior art, and is generally illustrated in Fig. 6. It has a hollow tube 81 through which the circular pipe A is concentrically fed, and is rotatably supported by a support 82. A circular ring 83, with its edge extending outwardly in the radial direction, is fixed to the outlet of the hollow tube 81, and an outer cutting section 84 and a backing section 85 are mounted on the outer surface of the circular ring 83.

The outer cutting section 84 and the backing section 85 can advance towards each other in a diametrical direction to hold the circular pipe, and then retreat to release the pipe A.

The outer cutting section 84 includes a freely-rotatable circular outer cutter 84a, a supporting member 84b which supports the cutter 84a, and an air-driven piston-cylinder mechanism 84c which moves (i.e. inwardly and outwardly) the cutter 84a and the supporting member 84b. The backing section 85, like the cutting section 84, includes a freely-rotatable roller 85a, a supporting member 85b which supports the roller 85a, and an air-driven piston-cylinder mechanism 85c.

The hollow tube 81 can be rotated by a drive mechanism 87 which, as seen in Figs. 2 and 6, includes a motor 87a, a drive pulley 87b, a driven pulley 87c and a drive belt 87d.

In order to supply air to the piston-cylinder mechanisms 84c and 85c via a hose 86, the hollow tube 81 has an axial air passage 81a and radial air passages 81b. Corresponding to these air passages 81a and 81b, the support 82 is provided with peripheral passages 82a and radial air passages 82b.

The first carriage 1 is reciprocated by a drive mechanism 11, as shown in Fig. 1. This mechanism 11 includes a rack gear 11a that extends from the front end (i.e. the left end in Fig. 1) of the carriage body 1a. The rack gear 11a extends in the direction that the circular pipe A is fed and is parallel to the axis of the circular pipe A. A pinion 11b, meshing with the rack gear 11a, is rotatably supported by a support member 11c so that the pinion 11b rotates perpendicularly to the rack gear 11a and the axis of the circular pipe A. The pinion 11b is connected to a motor 11e through a reduction gear 11d.

Attached to the front and back ends of the base B are a front stopper 11f and back stopper 11g, respectively.

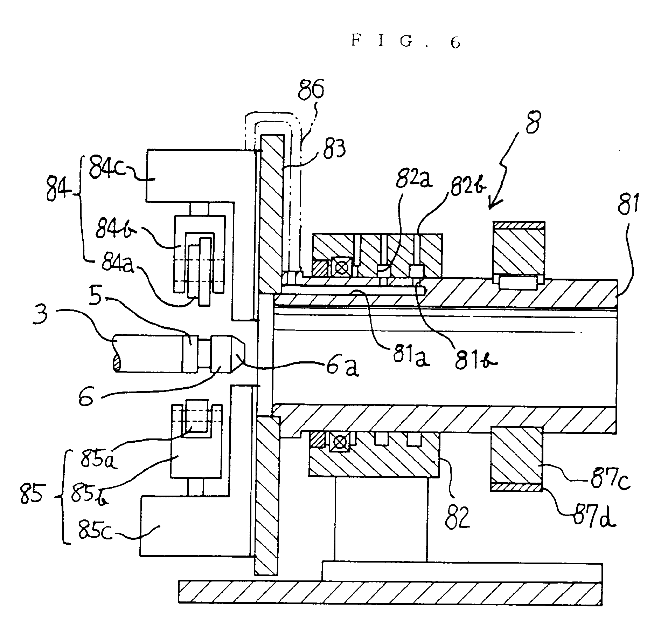

As shown in Fig. 2 and Fig. 5, a plate 1c is fixed on the right hand side (as seen in Fig. 2) of the upper surface of the carriage body 1a of the first carriage 1. Two rails 1d, which can be square in cross section, are mounted on this plate 1c in a direction parallel to the axis of the circular pipe A, and a second carriage 2 is movably mounted on these rails 1d so that it reciprocates.

The second carriage 2 includes a longitudinal member 2a₁ which is located above the rails 1d and a transverse member 2a₂ which extends to the left (as seen in Fig. 5). Thus, as a whole, the second carriage 2 is in L-shaped (when viewed from above).

Under the longitudinal member 2a₁, four sets of wheels (needle bearings) 2b are provided so that they run on the rails 1d. Also, under the transverse member 2a₂, a roller 2c is provided to run on the carriage body 1a.

The second carriage 2 has a drive mechanism 21. The drive mechanism 21 includes a mount 21a secured on the plate 1c of the first carriage 1 and a piston-cylinder mechanism 21b which is mounted on the mount 21a via a pin. The piston-cylinder mechanism 21b is connected to the second carriage 2.

Guide rods 3 (two such rods are shown in the drawings), that are column-like, extend from a supporting arm 4a (described below) in the anti-running direction of the circular pipe A. The guide rods 3 are parallel with each other and with the circular pipe A. In addition, the guide rods 3 are positioned on a circle (i.e. the guide rods 3 are located at an equal distance from the centre of rotation of the support arm 4a so as to draw a single circle when they are rotated).

Each of the guide rods 3 is such that the circular pipe A can be fitted over its outer surface (i.e. when the circular pipe A is fed out of the outlet of the hollow tube 81, it can fit on one of the guide rods 3).

A support 4 for the guide rods 3 is mounted on the second carriage 2. The support 4 includes the supporting arm 4a (as described above), a supporting shaft 4b, a pair of supporting pillars 4c and a positioning member 4d. The proximal ends of the guide rods 3 are detachably mounted on the supporting arms. The supporting shaft 4b is secured to the centre of the supporting arm 4a so that the supporting shaft 4b is positioned at the centre of the circle on which the guide rods 3 are arranged (i.e. at the centre of the circle which the guide rods 3 will draw when rotated). The supporting pillars 4c are secured on the second carriage 2 and rotatably support the supporting shaft 4b. The positioning member 4d engages with a cone-shaped hole provided at the opposite ends of the supporting arm 4a (see Fig. 5) to secure the guide rods in a horizontal position.

When the supporting arm 4a is rotated with the supporting shaft 4b, one of the guide rods 3 is positioned so that it is concentric to the hollow tube 81 and the free end of it is in front of the outlet of the hollow tube 81 so that the circular pipe A fits onto the guide rod 3.

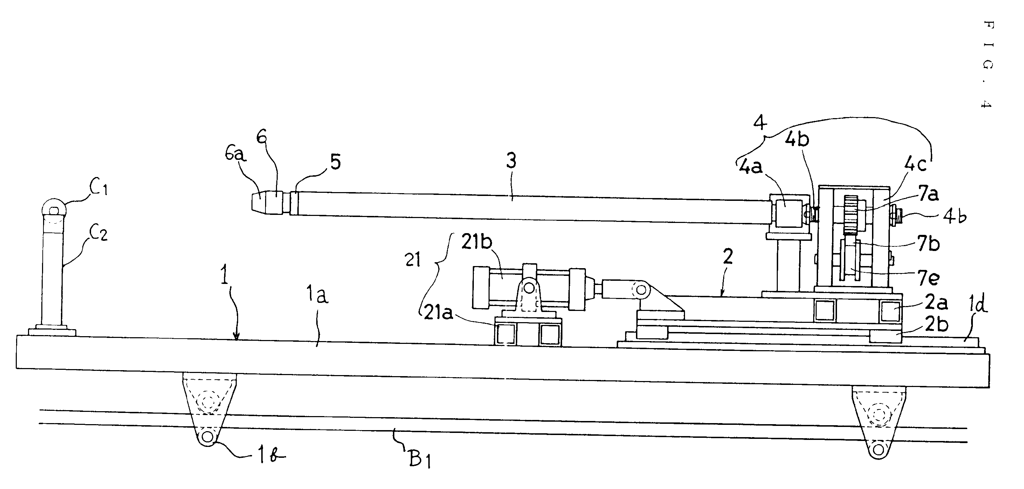

As best seen in Figs. 4 and 6, a circular inner cutter 5 is detachably attached to the free end of each of the guide rods 3, and a guide member 6 is attached adjacent to the inner cutter 5 on the guide rod 3. The guide member 6 may be detached from the guide rod 3 and has a tapered surface 6a at its front end.

A rotating assembly 7 for rotating the supporting shaft 4b for the guide rods 3 is mounted on the second carriage 2. The rotating assembly 7, as seen in Figs. 2, 4 and 5, includes a pinion 7a concentrically with the supporting shaft 4b, a rack gear 7b meshing with the pinion 7a at is upper surface and extending in the transverse direction relative to the axis of the circular pipe A, a piston-cylinder mechanism 7c for reciprocating the rack gear 7b, supports 7d for rotatably supporting the piston-cylinder mechanism 7c, and a roller 7e for supporting the rack gear 7b.

A guide roller C1 is provided at the rear end of the first carriage body 1a with its transverse shaft mounted on a support member C2.

In operation, the circular pipe A is fed through the hollow tube 81 of the outer cutting assembly 8 as indicated by the arrow D in Fig. 1 (from the right to the left in Fig. 1). The circular pipe A is then fitted on the guide rod 3, and the front end of the circular pipe A guided by the guide member 6 reaches the proximal end of the guide rod 3.

Next, the first carriage 1 moves forward (to the left in Figs. 1 and 2) at the same speed as the circular pipe A, and during this period the outer cutting assembly 8 is activated to rotate the hollow tube 81. The outer cutter 84a and the roll 85a, holding the circular pipe A therebetween, freely rotate about their axes and about the axis of the hollow tube 81, and the outer cutter 84a begins to cut the outer surface of the pipe A, in cooperation with the inner cutter 5.

The circular outer cutter 84a rolls over the circular inner cutter 5 while holding the pipe A therebetween, and applies a shearing force to the pipe A. Accordingly, dents and burrs will not form on the cut face of the pipe, whereby the accuracy and circularity of the pipe is maintained.

When cutting is complete, the second carriage 2 moves forward so that the guide rod 3 is moved in the running direction. At a position where the guide member 6 at the end of the guide rod 3 has moved away from the outer cutting assembly 8 (i.e. when the guide member 6 is spaced from the cut end of the cut pipe A), the support shaft 4b rotates by 180 degrees so that the cut portion of the pipe can be removed from the guide rod 3 (i.e. removed from the guide rod 3 shown at the bottom of Fig. 2). Then, the second carriage 2 moved backwards (to the right in Fig. 2) so that the guide member 6 reaches a set position which is inside the outer cutting mechanism 8 but in front of the outlet of the hollow tube 81.

Then, the first carriage 1 moved backwards, and the circular pipe A in the hollow tube 81 is guided by the hollow tube 81 so that the pipe A is fitted on the guide rod 3 again.

The above described operation is repeated periodically to obtain cut pipes of a certain length.

As described above, according to the present invention, even a pipe made of thin plate can be adequately cut at a desired length on the same line on which the pipe is formed.

## Claims

1. A device for cutting a circular pipe (A) whilst the pipe (A) is moving along its axis, the device comprising:
(a) a first carriage (1) mounted on a base (B) so that it can reciprocate beneath the pipe (A) in a direction parallel to the axis of the pipe (A);
(b) an outer cutting assembly (8) mounted on the first carriage (1), the outer cutting assembly (8) having a hollow tube (81) through which the pipe (A) passes, and an outer circular cutter (84a) mounted at the outlet of the hollow tube (81) so as to be rotatable about the axis of the pipe (A);
characterised in that the device further comprises:
(c) a second carriage (2) mounted on the first carriage (1) so that it can reciprocate in a direction parallel to the axis of the pipe (A);
(d) a plurality of guide rods (3) extending in a direction opposite to the direction in which the pipe (A) moves and parallel to the axis of the pipe (A), each of the guide rods (3) being such that the pipe (A) can fit onto the guide rod (3);
(e) supporting means (4) that supports the extending guide rods (3) on the second carriage (2) such that each extending guide rod (3) can be brought to a position at which it can receive the pipe (A) as the pipe (A) leaves the outlet of the hollow tube (81), the supporting means (4) comprising a supporting arm (4a) detachably mounting, at its ends, the proximal ends of the guide rods (3), a supporting shaft (4b) secured to the centre of the supporting arm (4a) such that the supporting shaft (4b) is positioned at the centre of a circle along which the guide rods (3) are arranged, and a rotation assembly (7) for said supporting shaft (4b) mounted on said second carriage (2) so that the supporting shaft (4b) can be rotated intermittently and stopped when each guide rod (3) coincides with the centre of the hollow tube (81); and
(f) an inner circular cutter (5) at the distal end of each guide rod (3).

2. A device as claimed in claim 1, wherein the first carriage (1) is mounted on rails (B1) which in turn are mounted on the base (B).

3. A device as claimed in claim 1 or 2, wherein the first carriage (1) is reciprocatable by a drive mechanism (11) comprising a rack gear (11a), a pinion (11b) meshing with the rack gear (11a) and a drive means (11e, 11d) for rotating the pinion (11b).

4. A device as claimed in any of claims 1 to 3, wherein the second carriage (2) is mounted on rails (1d) which in turn are mounted on the first carriage (1).

5. A device as claimed in any of the claims 1 to 4, wherein the second carriage (2) is reciprocatable by a drive mechanism (21) comprising a piston-cylinder mechanism (21b) mounted on the first carriage (1).

## Patentansprüche

1. Vorrichtung zum Schneiden eines kreisförmigen Rohrstrangs (A), wobei der Rohrstrang (A) längs seiner Achse bewegt wird, umfassend:
(a) einen ersten Schlitten (1), der auf einem Sockel (B) so befestigt ist, so daß er sich in einer Richtung parallel zur Achse des Rohrstrangs (A) unter dem Rohrstrang (A) hin und herbewegen kann;
(b) einer äußeren Schneidvorrichtung (8), die auf dem ersten Schlitten (1) angeordnet ist, wobei die äußere Schneidvorrichtung (8) ein hohles Rohr (81) besitzt, durch das der Rohrstrang (A) geht, und einen äußeren Kreisschneider (84a), der am Ausgang des hohlen Rohrs (81) so montiert ist, daß er sich um die Achse des Rohrstrangs (A) drehen kann; dadurch gekennzeichnet, daß die Vorrichtung weiter aufweist:
(c) einen zweiten Schlitten (2), der auf dem ersten Schlitten (1) so montiert ist, daß er sich in einer Richtung parallel zur Achse des Rohrstrangs (A) hin und herbewegen kann;
(d) eine Anzahl von Führungsstangen (3), die entgegen der Richtung, in der sich der Rohrstrang (A) bewegt, verlaufen und zwar parallel zur Achse des Rohrstrangs (A), wobei jede Führungsstange (3) derart ist, daß der Rohrstrang (A) auf die Führungsstange (3) paßt;
(e) eine Stützeinrichtung (4), die die vorstehenden Führungsstangen (3) auf dem zweiten Schlitten (2) derart stützt, daß jede vorstehende Führungsstange (3) in eine Position bringbar ist, in der sie den Rohrstrang (A) aufnehmen kann, wenn der Rohrstrang (A) das hohle Rohr (81) am Ausgang verläßt, wobei die Stützeinrichtung (4) umfaßt: einen Stützarm (4a), der die nächstgelegenen Enden der Führungsstangen (3) - an seinen Enden - lösbar hält; eine Stützwelle (4b), die in der Mitte des Stützarmes (4a) derart befestigt ist, daß die Stützwelle (4b) in der Mitte eines Kreises, längs dem die Führungsstangen (3) angeordnet sind, positioniert ist; und für die Stützwelle (4b) eine Drehvorrichtung (7), die auf dem zweiten Schlitten (2) montiert ist, so daß die Stützwelle (4b) zwischendurch gedreht werden kann und angehalten, wenn die jeweilige Führungsstange (3) mit dem Mittelpunkt des Hohlrohrs (81) zusammenfällt; und
(f) einen Innenschneider (5) am entfernten Ende der jeweiligen Führungsstange (3).

2. Vorrichtung nach Anspruch 1, wobei der erste Schlitten (1) auf Schienen (B1), die wiederum auf dem Sockel (B) montiert sind, angeordnet ist.

3. Vorrichtung nach Anspruch 1 oder 2, wobei der erste Schlitten (1) von einem Antriebsmechanismus (11), beinhaltend einen Zahntrieb (11a), ein Ritzel (11b), das mit dem Zahntrieb (11a) eingreift und eine Antriebseinrichtung (11e, 11d) , die das Ritzel (11b) dreht.

4. Vorrichtung nach irgendeinem der Ansprüche 1 bis 3, wobei der zweite Schlitten (2) auf Schienen (1d) läuft, die wiederum auf dem ersten Schlitten (1) montiert sind.

5. Vorrichtung nach irgendeinem der Ansprüche 1 bis 4, wobei der zweite Schlitten (2) von einem Antriebsmechanismus (21), beinhaltend einen Kolbenzylindermechanismus (21b), der auf dem ersten Schlitten (1) montiert ist, hin und herbewegt wird.

## Revendications

1. Appareil de découpe d'un tube circulaire (A) lorsque ce tube (A) se déplace suivant son axe, l'appareil comprenant :
(a) un premier chariot (1) monté sur une base (B) afin qu'il puisse se déplacer en translation sous le tube (A) en direction parallèle à l'axe du tube (A),
(b) un ensemble (8) de coupe externe monté sur le premier chariot (1), l'ensemble de coupe externe (8) ayant un tuyau (81) dans lequel passe le tube (A), et un organe circulaire externe de coupe (84a) monté à la sortie du tuyau (81) afin qu'il puisse tourner autour de l'axe du tube (A),
caractérisé en ce que l'appareil comporte en outre :
(c) un second chariot (2) monté sur le premier chariot (1) afin qu'il puisse se déplacer en translation en direction parallèle à l'axe du tube (A),
(d) plusieurs tiges (3) de guidage disposées en sens opposé au sens de déplacement du tube (A) et parallèles à l'axe du tube (A), chacune des tiges de guidage (3) étant telle que le tube (A) peut s'ajuster sur la tige de guidage (3),
(e) un dispositif (4) de support des tiges de guidage (3) sur le second chariot (2) afin que chaque tige de guidage (3) puisse être mise en position dans laquelle elle peut loger le tube (A) lorsque le tube (A) quitte la sortie du tuyau (81), le dispositif de support (4) comprenant un bras de support (4a) supportant de façon amovible, à ses extrémités, les extrémités internes des tiges de guidage (3), un arbre de support (4b) fixé au centre du bras de support (4a) afin que l'arbre de support (4b) soit placé au centre d'un cercle le long duquel sont disposées les tiges de guidage (3), et un ensemble (7) de rotation destiné à supporter l'arbre de support (4b) monté sur le second chariot (2) afin que l'arbre de support (4b) puisse tourner par intermittence et soit arrêté lorsque chaque tige (3) de guidage coïncide avec le centre du tuyau (81), et
(f) un organe circulaire interne de coupe (5) placé à l'extrémité externe de chaque tige de guidage (3).

2. Appareil selon la revendication 1, dans lequel le premier chariot (1) est monté sur des rails (B1) qui sont eux-mêmes montés sur la base (B).

3. Appareil selon la revendication 1 ou 2, dans lequel le premier chariot (1) peut se déplacer en translation sous la commande d'un mécanisme d'entraînement (11) comprenant une crémaillère (11a), un pignon (11b) en prise avec la crémaillère (11a) et un dispositif d'entraînement (11e, 11d) destiné à faire tourner le pignon (11b).

4. Appareil selon l'une quelconque des revendications 1 à 3, dans lequel le second chariot (2) est monté sur des rails (1d) qui sont eux-mêmes montés sur le premier chariot (1).

5. Appareil selon l'une quelconque des revendications 1 à 4, dans lequel le second chariot (2) est mobile en translation sous la commande d'un mécanisme d'entraînement (21) qui comporte un mécanisme à piston et cylindre (21b) monté sur le premier chariot (1).
